# EUROPEAN PATENT SPECIFICATION

(11) **EP 1 699 329 B1**
(45) Date of publication and mention of the grant of the patent: **18.03.2009**
(21) Application number: 04806575.9
(22) Date of filing: 15.12.2004
(51) Int. Cl.: A47J 31/46, A47J 31/06

(54) **A BEVERAGE MAKER INCORPORATING MULTIPLE BEVERAGE COLLECTION CHAMBERS**
GETRÄNKEZUBEREITUNGSVORRICHTUNG MIT MEHREREN GETRÄNKESAMMELKAMMERN
APPAREIL DE PREPARATION DE BOISSONS COMPORTANT PLUSIEURS CHAMBRES DE RECEPTION DE BOISSONS

(30) Priority: 23.12.2003 GB 0329744
(43) Date of publication of application: 13.09.2006
(73) Proprietor: Koninklijke Philips Electronics N.V., 5621 BA Eindhoven (NL)
(72) Inventor: WOOD, Gemma, L. c/o Philips Intellectual Property, Redhill Surrey RH1 5HA (GB); SNELL, Richard, A., Philips Intellectual Property, Redhill Surrey RH1 5HA (GB); KODDEN, Hans, J. c/o Philips Intellectual Property, Redhill Surrey RH1 5HA (GB); TUCKWELL, Jonathan D Philips Intellectual Property, Redhill Surrey RH1 5HA (GB)
(74) Representative: Schouten, Marcus Maria
(86) International application number: PCT/IB2004/052814
(87) International publication number: WO 2005/063094

(56) References cited:
- EP-A- 0 904 717
- DE-A1- 3 346 280
- US-A- 4 098 175

## Description

This invention relates to a beverage maker incorporating multiple beverage collection chambers and to beverage preparation assembly that can be removably mounted on a beverage maker and that incorporates multiple beverage collection chambers.

Many people prefer to consume beverages such as coffee with a layer of foam, or a so-called "crema layer" on top. Much effort has therefore been made to design both domestic and commercial beverage makers that reliably produce a layer of foam on such beverages. One such beverage maker is the applicants' Senseo^{®} coffee maker. Coffee makers similar to this are described in patent publications EP 0904717 and WO 03/055366 for example. Another beverage maker is known from DE 3 346 280 A.

These coffee makers use coffee pads which each comprise a disc shape wad of coffee grounds enclosed in filter paper. To make coffee, a coffee pad is inserted in a coffee preparation chamber of the coffee maker. Hot water is supplied to the chamber at pressure (typically around 1 bar). As the hot water passes through the pad in the chamber, coffee extract mixes with the hot water to produce coffee. Prepared coffee is discharged from the coffee preparation chamber through a nozzle to a foam chamber. The nozzle is sufficiently small that the prepared coffee exits the nozzle as jet of liquid due to pressure in the coffee preparation chamber. This jet enters the foam chamber and, as the jet impacts a side of the foam chamber, or the surface of coffee already in the foam chamber, small bubbles are created in the coffee. These bubbles create a layer of foam on the surface of the coffee, i.e. the desired "crema layer". The prepared coffee, with its crema layer, is dispensed from the foam chamber through spout into a cup for drinking.

It is common for beverage makers to make several different flavour drinks. For example, the Senseo^{®} coffee maker can be used to make coffee of different strengths or even mocha coffee (chocolate flavoured coffee) and such like by using different coffee pads. In other beverage makers, it may be possible to make hot chocolate, tea or other beverages. However, where a beverage maker has only one liquid path (e.g. foam chamber, spout etc.) for dispensing beverages, either the liquid path must be cleaned between making different flavour beverages or some contamination of a beverage occurs from the residue of previously prepared beverages left in the liquid path. The present invention seeks to overcome this problem.

The applicants' have recognised that the problem is particularly acute where a foam chamber is included in the liquid path, such as in the coffee maker described above. The foam produced in the foam chamber tends to be stickier than the beverage itself. Furthermore, foam chambers are usually designed to slow down the flow of beverage to allow foam to be created and slow moving liquids tend to leave greater residue. This results in significant beverage residue being left in the foam chamber to contaminate any beverages that are made subsequently.

According to one aspect of the present invention; there is provided a beverage maker comprising:
a beverage preparation chamber in which beverage can be prepared;
a hot water delivery system for delivering hot water to the beverage preparation chamber;
a discharge opening for discharging prepared beverage from the beverage preparation chamber;
multiple beverage collection chambers for receiving prepared beverage discharged though the discharge opening; and
one or more outlets for dispensing beverage from the beverage collection chambers into a cup for drinking,
wherein the alignment of the beverage collection chambers relative to the discharge opening is adjustable to position any one of the beverage collection chambers to receive beverage from the discharge opening instead of the other beverage collection chamber(s).

According to another aspect of the present invention, there is provided a method of making a beverage, the method comprising:
providing hot water to a beverage making chamber in which the beverage is prepared;
discharging prepared beverage from the beverage making chamber through a discharge opening;
receiving prepared beverage discharged through the discharge opening in one of multiple beverage collection chambers; and
dispensing beverage from the beverage collection chamber through an outlet into a cup for drinking,
wherein the method includes adjusting the alignment of the beverage collection chambers relative to the discharge opening to position any one of the beverage collection chambers to receive beverage from the discharge opening instead of the other beverage collection chamber(s).

This allows different beverage collection chambers to be selected from time to time. For example, one beverage collection chamber can be used during the preparation of one beverage and another beverage collection chamber can be used during preparation of another beverage. Contamination of a beverage by residue of a previously prepared beverage is avoided by using different beverage collection chambers to collect and dispense each beverage. Beverages of different flavours can therefore be prepared without cross-contamination. Furthermore, the coffee maker can be used to prepare several beverages, either of the same or different flavours, before it needs to be cleaned. The frequency with which the beverage maker needs to be cleaned is therefore reduced.

The beverage maker may be any sort of beverage maker that includes a beverage collection chamber. For example, the beverage maker might be a vending machine. However, the beverage maker is typically a commercial or domestic beverage maker. In particular, it may be a filter or filter pad type beverage maker. The beverage preparation chamber may therefore include a filter support for supporting a filter. In particular, the filter support may comprise a surface and have projections for supporting the filter away from the surface.

The invention finds particular utility in beverage makers that incorporate foam creation. The pad-type beverage maker described above is one such coffee maker. The beverage collection chambers may therefore be foam chambers. In other words, the beverage collection chambers may comprise foam chambers in which foam can be created in the prepared beverage.

Similarly, the discharge opening may be adapted to aid foam creation. It may therefore comprise a nozzle. The nozzle might comprise an aperture having a diameter sufficiently small to discharge the beverage as a jet to create foam in the beverage in the foam chamber. To achieve this, the aperture may have a width or diameter substantially between 0.75 mm to 0.9 mm (e.g. 0.83mm). As described above, when the jet of beverage impacts a surface in the foam chamber, foam is created. Of course, in other examples, a foam creation device, such as a mixer, stirrer or compressed air supply may be provided to create foam.

Whilst the beverage maker described above is effective in producing foam in beverages, the applicants recognise that foam creation is not always desirable. Some users may prefer beverages without foam and certain beverages, such as tea, are not usually consumed with a "crema layer". In one example, the beverage maker may therefore usefully further comprise a bypass chamber that can be aligned with the discharge opening to receive prepared beverage discharged from the discharge opening so that it bypasses the foam chambers and foam creation is avoided.

Typically, the beverage maker has only one discharge opening or nozzle. This might be provided in the filter support for example. The discharge opening might be moveable in the beverage maker to adjust its alignment with the beverage collection chambers. However, it is preferred that beverage collection chambers are moveable in the beverage maker to adjust their alignment relative to the discharge opening. For example, the beverage maker may further comprise a beverage collection unit for housing the beverage collection chambers. This beverage collection unit may be moveable to adjust the alignment of the beverage collection chambers. It is particularly preferred that the beverage collection chambers each comprise a segment of the beverage collection unit (e.g. a cylindrical sector). The beverage collection unit might be rotatable in the beverage maker to adjust the alignment of the beverage collection chambers relative to the nozzle.

Usually, the beverage maker has only one outlet. This outlet cooperates with the beverage collection chamber aligned with the discharge opening to allow beverage to be dispensed from the beverage collection chamber. For example, each of the beverage collection chambers may have an opening that aligns with the outlet when that beverage collection chamber is aligned with the discharge opening. To improve alignment, the beverage collection chambers typically incorporate an indexing mechanism.

In other examples, the beverage maker may have a separate outlet for each beverage collection chamber. Whilst this might result in the beverage maker being bulkier, it is simpler, as the beverage collection chambers do not need to be selectively aligned to a shared outlet.

The applicants have recognised that a beverage preparation assembly incorporating the multiple foam chambers described above could be removably fitted to a conventional beverage maker.

According to another aspect of the present invention, there is therefore provided a beverage preparation assembly that can be removably mounted on a beverage maker, the assembly comprising:
a beverage preparation chamber in which beverage can be prepared;
a discharge opening for discharging prepared beverage from the beverage preparation chamber;
multiple beverage collection chambers for receiving prepared beverage discharged though the discharge opening; and
one or more outlets for dispensing beverage from the beverage collection chambers into a cup for drinking,
wherein the alignment of the beverage collection chambers relative to the discharge opening is adjustable to position any one of the beverage collection chambers to receive beverage from the discharge opening instead of the other beverage collection chamber(s).

This beverage preparation assembly may include any of the preferred features on the invention described above.

Preferred embodiments of the invention will now be described, by way of example only, with reference to the accompanying drawings, in which:
Figure 1 is a schematic illustration showing sectional side view of a beverage maker according to the invention; and
Figure 2 is a schematic illustration of a beverage preparation assembly of the beverage maker of figure 1.

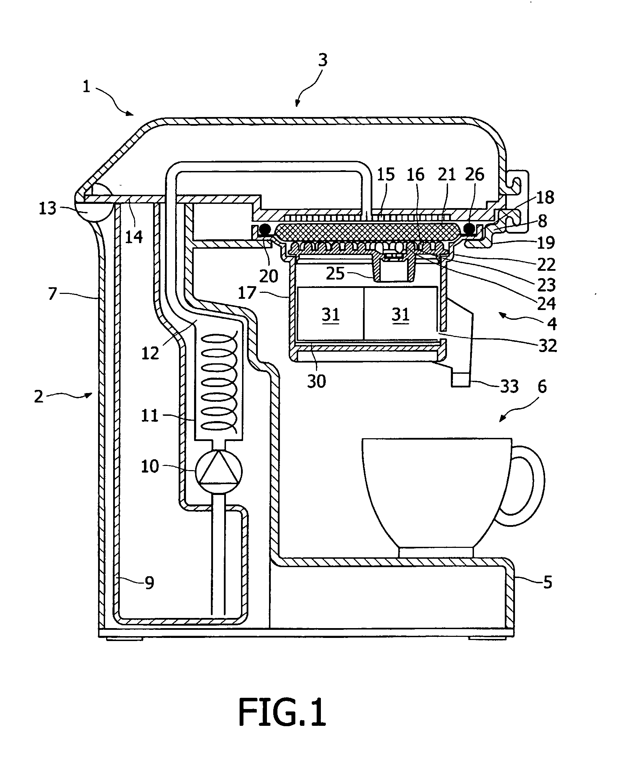

Referring to figure 1, a beverage maker 1 comprises a housing 2 with a lid 3 and a removable beverage preparation assembly 4. The housing 2 has a platform 5, on which a cup 6 can be placed, an upright body 7 and a beverage preparation assembly support 8 that accommodates the removable beverage preparation assembly 4 and supports it in a position over the cup 6 on the platform 5.

The upright body 7 houses a hot water delivery system comprising a water reservoir 9, a water pump 10, a water heater 11 and a conduit 12. In this embodiment, the water reservoir 9 extends over the full height of the upright body 7 and is open at its top so that it can easily be filled with water. The water pump 10 is connected to draw water from the bottom of the water reservoir 9 and push it through the water heater 11 and, from there, along the conduit 12.

The lid 3 is hinged at the top of the upright body 7 by a hinge 13 and, when it is closed, a bottom surface 14 of the lid 3 closes the opening in the reservoir 9 to prevent water in the reservoir 9 spilling out. The conduit 12 extends into the lid 3 and opens into a recess 15 on the bottom surface of the lid 3. Again when the lid 3 is closed, the recess 15 is positioned above the beverage preparation assembly support 8 and consequently the removable beverage preparation assembly 4 when positioned in the support 8. As described in more detail below, together with the beverage preparation assembly 4, the recess 15 forms a beverage preparation chamber 16.

The beverage preparation assembly 4 comprises a cup shaped body 17. A rim 18 running around the outside of an open end of the cup shaped body 17 is arranged to rest on tabs 19 of the support 8. In this embodiment, the assembly 4 is positioned on and removed from the support 8 by the rim 18 of the cup shaped body 17 sliding along the tabs 19 of the support 8. In other embodiments, a bayonet fitting or such like is provided. A handle (not shown) extends from the cup shaped body 17 to allow the assembly 4 to be manipulated.

The diameter of the cup shaped body 17 is largest at the open end, which is uppermost in use. Inward of open end is a filter ledge 20. The filter ledge 20 is a lip extending around the inside surface of the cup shaped body 17 for supporting the perimeter of a filter pad 21. In this embodiment, the filter pad 21 is a disc of filter paper holding a wad of coffee grounds. More specifically, two circular pieces of filter paper sandwich the coffee grounds and are glued, or otherwise joined, together at their perimeter. The filter pad 21 could equally hold granules for making other beverages, such as mocha coffee, hot chocolate and so on. The filter ledge 20 of the cup shaped body 17 has a slightly smaller diameter than the perimeter of the filter pad 21 so that, when the filter pad is placed inside the cup shaped body 17, its perimeter rests on the filter ledge 20.

Inward of the filter ledge 20 is a support ledge 22. Similar to the filter ledge 20, the support ledge 22 is a lip extending around the inside surface of the cup shaped body 17. However the support ledge 22 is arranged to support a filter support 23. The filter support 23 is a disc that, in this embodiment, has a slightly smaller diameter than the filter pad 21. Again similar to the filter ledge 20, the support ledge 22 has a slightly smaller diameter than the perimeter of filter support 23 so that, when the filter support 23 is placed inside the cup shaped body 17, its perimeter rests on the support ledge 22. When in position in the cup shaped body 17, the filter support 23 is below the filter pad 21 and supports the underside of the pad 21. It also forms the base of the beverage preparation chamber 16. More specifically, the beverage preparation chamber 16 is bounded by the recess 15 of the lid 3, the filter support 23 and a side wall of the cup shaped body 17. An o-ring seal 26 is provided around the recess 15 of the lid 3 for engagement with the assembly 4 to seal the chamber 16.

The filter support 23 has a plurality of projections 24 on its upper surface and a nozzle 25. The projections 24 support the underside of the filter pad 21. The nozzle 25 extends though the filter support 23, i.e. from the beverage preparation chamber 16 to the underside of the filter support 23 in use and allows prepared beverage to exit the beverage preparation chamber 16. In this example, the nozzle is an aperture having a diameter substantially between 0.75mm and 0.9mm (e.g. 0.83mm). This means that, with a pressure of around 1 bar over atmospheric pressure in the beverage preparation chamber, prepared beverage leaves the nozzle 25 as a jet of liquid. This jet aids foam creation, as described below.

Inward of the support ledge 22, the cup shaped body 17 is closed to form a housing for a foam unit 30. In other words, the cup shaped body 17 houses the foam unit 30 under the nozzle 25 of the filter support 23 so that prepared beverage can pass through the nozzle 25 to the foam unit 30.

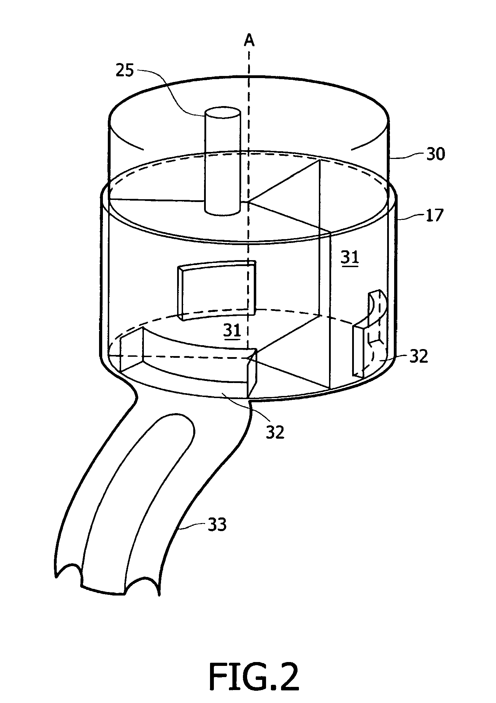

The foam unit 30 comprises a receptacle divided into several foam compartments 31. The foam compartments 31 are open at one end. This end forms the top of the unit 30 in use. In this embodiment, the foam unit 30 has three foam compartments 31, each of which comprises a segment of the receptacle. The receptacle is cylindrical. Looking at the circular cross-section of the cylinder, the compartments are sectors of the circle. In other words, the compartments might be referred to as cylindrical sectors. This can be seen more clearly in figure 2. Of course, different numbers of compartments 31 and different shapes are used in other embodiments.

Each compartment 31 of the foam unit 30 has an outlet opening 32. The outlet openings 32 each comprise a recess in the side wall of the receptacle with apertures (not shown) arranged to allow prepared beverage to pass out of respective compartments 31. The outlets 32 can engage with a spout 33 that extends from the cup shaped body 17 and from which beverage can be dispensed into the cup 6.

The foam unit 30 is mounted to the cup shaped body 17 of the removable beverage preparation assembly 4 about an axis A. The axis A is substantially upright in use so that the foam compartments 31 can rotate around it in a plane that is horizontal in use. In this embodiment, the axis A is the major axis running along the centre of the cylindrical receptacle that forms the foam unit 30. The nozzle 25 is offset from the central axis A of the unit 30 and, as the foam unit 30 is rotated, the compartments 31 pass one by one under the nozzle 25.

An indexing mechanism (not shown) is provided to resiliently hold each of the compartments 31 in a position directly under the nozzle 25. For example, an indexing member is provided on the unit 30 comprising a domed element biased away from the outer surface of the unit 30. As the unit 30 is rotated, the element cooperates with appropriately positioned recesses on the inner surface of the cup shaped body 17 to resiliently hold the unit 30 in an indexing position. Of course, the unit 30 can be indexed by other means in other embodiments.

In this embodiment, a rotation mechanism (not shown) is also provided. More specifically, a lever cooperates with a ratchet mechanism disposed around the axis A so that moving the lever to and fro causes the unit 30 to rotate in a clockwise direction. Of course, the unit 30 can be rotated by other means in other embodiments.

To make a beverage, a user first fills the water reservoir 9 with water. This is done by opening the lid 3 and pouring water into the top of the reservoir 9. With the lid 3 open, the user also inserts a filter pad 21 into the removable beverage preparation assembly 4. More specifically, a filter pad 21 is placed on the filter support 23. The lid 3 is then shut.

The water pump 10 pumps water through the water heater 11, where it is heated to a desired temperature, e.g. slightly below boiling point, and through the conduit 12 to the beverage preparation chamber 16. Water passes into the beverage preparation chamber 16 at a pressure of around 1 bar (e.g. 0.8 bar to 1.6 bar) over atmospheric pressure. The water arrives at the top of the filter pad 21 and is pressed through the filter pad 21, where it mixes with the coffee grounds or beverage granules in the filter pad 21 to form a beverage. The prepared beverage passes out of the bottom of the filter pad 21 to the filter support 22. The filter support 22 directs the prepared beverage though the nozzle 25 to the foam unit 30.

The prepared beverage enters the foam compartment 31 of the unit 30 that is below the nozzle 25. As the jet of liquid formed by the nozzle 25 impacts the bottom of the foam compartment 31, foam is created. Furthermore, the outlet 32 from the compartment 31 is small enough that beverage exits the compartment 31 more slowly than it enters the compartment 31 through the nozzle 25. The compartment 31 therefore acts as a buffer temporarily storing some of the prepared beverage. The jet of liquid can interact with the stored beverage and this improves foam creation. As the beverage leaves the compartment 31 through the outlet 32, it passes along the spout 33 and is dispensed into the cup 6 for drinking.

When it is desired to make another beverage, the used filter pad 21 is replaced with a new filter pad 21. Also, a user manipulates the rotation mechanism to rotate another of the foam compartments 31 into position under the nozzle 25. The beverage is therefore prepared using a different foam compartment 31, which is clean and free from residue from the previously prepared beverage. Only when all (three) of the foam compartments have been used, need the foam compartments 31 be cleaned by a user.

In another embodiment, one of the foam compartments 31 is replaced by a bypass chamber. The bypass chamber has a surface for slowing prepared beverage exiting the nozzle without creating foam. For example, the surface may slope from in-line with the jet to one side. The outlet opening 32 of the compartment is retained to allow the beverage to be dispenses from the bypass chamber.

The described embodiments of the invention are only embodiments of how the invention may be implemented. Modifications, variations and changes to the described embodiments will occur to those having appropriate skills and knowledge. These modifications, variations and changes may be made without departure from the scope of the invention as defined in the claims.

## Claims

1. A beverage maker (1) comprising:
a beverage preparation chamber (16) in which beverage can be prepared;
a hot water delivery system (9,10,11,12) for delivering hot water to the beverage preparation chamber (16);
a discharge opening (25) for discharging prepared beverage from the beverage preparation chamber (16);
multiple beverage collection chambers (31) for receiving prepared beverage discharged though the discharge opening (25); and
one or more outlets (33) for dispensing beverage from the beverage collection chambers (31) into a cup (6) for drinking,
wherein the alignment of the beverage collection chambers (31) relative to the discharge opening (25) is adjustable to position any one of the beverage collection chambers (31) to receive beverage from the discharge opening (25) instead of the other beverage collection chamber(s) (31).

2. The beverage maker (1) of claim 1, wherein the beverage preparation chamber (16) houses a filter support (23) for supporting a filter (21).

3. The beverage maker (1) of claim 2, wherein the filter support (23) comprises a surface and projections (24) for supporting the filter (21) away from the surface.

4. The beverage maker (1) of any one of the preceding claims, having only one discharge opening (25) for discharging prepared beverage from the beverage preparation chamber (16).

5. The beverage maker (1) of any one of the preceding claims, wherein the beverage collection chambers (31) are moveable in the beverage maker (1) to adjust their alignment relative to the discharge opening (25).

6. The beverage maker (1) of any one of the preceding claims, further comprising a beverage collection unit (30) for housing the beverage collection chambers (31).

7. The beverage maker (1) of claim 6, wherein the beverage collection chambers (31) each comprise a segment of the beverage collection unit (30).

8. The beverage maker (1) of claim 6 or claim 7, wherein the beverage collection unit (30) is rotatable in the beverage maker (1) to adjust the alignment of the beverage collection chambers (31) relative to the discharge opening (25).

9. The beverage maker (1) of any one of the preceding claims, comprising only one outlet (33) that cooperates with the beverage collection chamber (31) aligned with the discharge opening (25) to allow beverage to be dispensed from the beverage collection chamber (31).

10. The beverage maker (1) of any one of claims 1 to 8, comprising a separate outlet (33) for each beverage collection chamber (31).

11. The beverage maker (1) of any one of the preceding claims, wherein the discharge opening (25) comprises a nozzle.

12. The beverage maker (1) of claim 11, wherein the nozzle comprises an aperture having a diameter sufficiently small to discharge the beverage as a jet to create foam in the beverage in the beverage collection chamber (31).

13. The beverage maker (1) of claim 12, wherein the aperture has a width substantially between 0.75 mm and 0.9 mm.

14. The beverage maker (1) of any one of the preceding claims, wherein the beverage collection chambers (31) comprise foam chambers in which foam can be created in the prepared beverage.

15. The beverage maker (1) of claim 14, further comprising a bypass chamber that can be aligned with the discharge opening (25) to receive prepared beverage discharged from the discharge opening (25) so that it bypasses the foam chambers (31) and foam creation is avoided

16. A beverage preparation assembly (4) that can be removably mounted on a beverage maker (1), the assembly (4) comprising:
a beverage preparation chamber (16) in which beverage can be prepared;
a discharge opening (25) for discharging prepared beverage from the beverage preparation chamber (16);
multiple beverage collection chambers (31) for receiving prepared beverage discharged though the discharge opening (25); and
one or more outlets (33) for dispensing beverage from the beverage collection chambers (31) into a cup (6) for drinking,
wherein the alignment of the beverage collection chambers (31) relative to the discharge opening (25) is adjustable to position any one of the beverage collection chambers (31) to receive beverage from the discharge opening (25) instead of the other beverage collection chamber(s) (31).

17. A method of making a beverage, the method comprising:
providing hot water to a beverage making chamber (16) in which the beverage is prepared;
discharging prepared beverage from the beverage making chamber (16) through a discharge opening (25);
receiving prepared beverage discharged through the discharge opening (25) in one of multiple beverage collection chambers (31); and
dispensing beverage from the beverage collection chamber (31) through an outlet into a cup (6) for drinking,
wherein the method includes adjusting the alignment of the beverage collection chambers (31) relative to the discharge opening (25) to position any one of the beverage collection chambers (31) to receive beverage from the discharge opening (25) instead of the other beverage collection chamber(s) (31).

## Patentansprüche

1. Getränkebereiter (1) mit:
- einer Getränkezubereitungskammer (16), in welcher ein Getränk zubereitet werden kann;
- einem Heißwasserzuführsystem (9,10,11,12), um der Getränkezubereitungskammer (16) heißes Wasser zuzuführen;
- einer Entnahmeöffnung (25), um der Getränkezubereitungskammer (16) das zubereitete Getränk zu entnehmen;
- mehreren Getränkesammelkammern (31), um das durch die Entnahmeöffnung (25) entnommene, zubereitete Getränk aufzunehmen; sowie
- einem oder mehreren Auslässen (33), um das Getränk aus den Getränkesammelkammern (31) in eine Tasse (6) zum Trinken desselben abzugeben,
wobei die Ausrichtung der Getränkesammelkammern (31) relativ zu der Entnahmeöffnung (25) einstellbar ist, um eine der Getränkesammelkammern (31) so zu positionieren, dass das Getränk statt aus der (den) anderen Getränkesammelkammer(n) (31) aus der Entnahmeöffnung (31) aufgenommen wird.

2. Getränkebereiter (1) nach Anspruch 1, wobei in der Getränkezubereitungskammer (16) ein Filterhalter (23) untergebracht ist, um ein Filter (21) zu halten.

3. Getränkebereiter (1) nach Anspruch 2, wobei der Filterhalter (23) eine Oberfläche und Vorsprünge (24) umfasst, um das Filter (21) von der Oberfläche weg zu halten.

4. Getränkebereiter (1) nach einem der vorangegangenen Ansprüche mit lediglich einer Entnahmeöffnung (25), um der Getränkezubereitungskammer (16) das zubereitete Getränk zu entnehmen.

5. Getränkebereiter (1) nach einem der vorangegangenen Ansprüche, wobei die Getränkesammelkammern (31) in dem Getränkebereiter (1) bewegbar sind, um deren Ausrichtung relativ zu der Entnahmeöffnung (25) einzustellen.

6. Getränkebereiter (1) nach einem der vorangegangenen Ansprüche, welcher weiterhin eine Getränkesammeleinheit (30) umfasst, um die Getränkesammelkammern (31) unterzubringen.

7. Getränkebereiter (1) nach Anspruch 6, wobei die Getränkesammelkammern (31) jeweils ein Segment der Getränkesammeleinheit (30) umfassen.

8. Getränkebereiter (1) nach Anspruch 6 oder Anspruch 7, wobei die Getränkesammeleinheit (30) in dem Getränkebereiter (1) drehbar ist, um die Ausrichtung der Getränkesammelkammern (31) relativ zu der Entnahmeöffnung (25) einzustellen.

9. Getränkebereiter (1) nach einem der vorangegangenen Ansprüche mit lediglich einem Auslass (3), der mit der zu der Entnahmeöffnung (25) ausgerichteten Getränkesammelkammer (31) zusammenwirkt, damit das Getränk von der Getränkesammelkammer (31) abgegeben werden kann.

10. Getränkebereiter (1) nach einem der Ansprüche 1 bis 8, mit einem separaten Auslass (33) für jede Getränkesammelkammer (31).

11. Getränkebereiter (1) nach einem der vorangegangenen Ansprüche, wobei die Entnahmeöffnung (25) eine Düse umfasst.

12. Getränkebereiter (1) nach Anspruch 11, wobei die Düse eine Öffnung mit einem Durchmesser umfasst, der klein genug ist, um das Getränk zwecks Erzeugens von Schaum in dem Getränk in der Getränkesammelkammer (31) als einen Strahl zu entnehmen.

13. Getränkebereiter (1) nach Anspruch 12, wobei die Öffnung eine Breite aufweist, die im Wesentlichen zwischen 0,75 mm und 0,9 mm liegt.

14. Getränkebereiter (1) nach einem der vorangegangenen Ansprüche, wobei die Getränkesammelkammern (31) Schaumkammern umfassen, in denen Schaum in dem zubereiteten Getränk erzeugt werden kann.

15. Getränkebereiter (1) nach Anspruch 14, welcher weiterhin eine Umgehungskammer umfasst, die zu der Entnahmeöffnung (25) ausgerichtet werden kann, um das der Entnahmeöffnung (25) entnommene, zubereitete Getränk aufzunehmen, so dass es die Schaumkammern (31) umgeht und eine Schaumerzeugung verhindert wird.

16. Getränkezubereitungsanordnung (4), welche auf einem Getränkebereiter (1) entfernbar angebracht werden kann, wobei die Anordnung (4) umfasst:
- eine Getränkezubereitungskammer (16), in der das Getränk zubereitet werden kann;
- eine Entnahmeöffnung (25), um der Getränkezubereitungskammer (16) das zubereitete Getränk zu entnehmen;
- mehrere Getränkesammelkammern (31), um das durch die Entnahmeöffnung (25) entnommene, zubereitete Getränk aufzunehmen; sowie
- ein oder mehrere Auslässe (33), um das Getränk aus den Getränkesammelkammern (31) in eine Tasse (6) zum Trinken desselben abzugeben,
wobei die Ausrichtung der Getränkesammelkammern (31) relativ zu der Entnahmeöffnung (25) einstellbar ist, um eine der Getränkesammelkammern (31) so zu positionieren, dass das Getränk statt aus der (den) anderen Getränkesammelkammer(n) (31) aus der Entnahmeöffnung (31) aufgenommen wird.

17. Verfahren zur Zubereitung eines Getränks, wobei das Verfahren die folgenden Schritte umfasst:
- Zuführen von heißem Wasser zu einer Getränkezubereitungskammer (16), in welcher das Getränk zubereitet wird;
- Entnehmen des zubereiteten Getränks aus der Getränkezubereitungskammer (16) durch eine Entnahmeöffnung (25);
- Aufnehmen des zubereiteten Getränks durch die Entnahmeöffnung (25) in eine von mehreren Getränkesammelkammern (31); sowie
- Abgeben des Getränks aus der Getränkesammelkammer (31) durch einen Auslass in eine Tasse (6) zum Trinken desselben,
wobei das Verfahren das Einstellen der Ausrichtung der Getränkesammelkammern (31) relativ zu der Entnahmeöffnung (25) umfasst, um eine der Getränkesammelkammern (31) so zu positionieren, dass das Getränk statt aus der (den) anderen Getränkesammelkammer(n) (31) aus der Entnahmeöffnung (25) aufgenommen wird.

## Revendications

1. Appareil de préparation de boissons (1) comprenant :
une chambre de préparation de boissons (16) dans laquelle des boissons peuvent être préparées ;
un système de fourniture d'eau chaude (9, 10, 11, 12) pour fournir de l'eau chaude à la chambre de préparation de boissons (16) ;
une ouverture de décharge (25) pour décharger les boissons préparées à partir de la chambre de préparation de boissons (16) ;
plusieurs chambres de réception de boissons (31) pour recevoir les boissons préparées qui sont déchargées à travers l'ouverture de décharge (25) ; et
une ou plusieurs sorties (33) pour distribuer les boissons à partir des chambres de réception de boissons (31) dans une tasse (6) pour boire,
dans lequel l'alignement des chambres de réception de boissons (31) par rapport à l'ouverture de décharge (25) est réglable de manière à positionner l'une quelconque des chambres de réception de boissons (31) afin de recevoir les boissons de l'ouverture de décharge (25) au lieu de les recevoir de l'autre (des autres) chambre(s) de réception de boissons (31).

2. Appareil de préparation de boissons (1) selon la revendication 1, dans lequel la chambre de préparation de boissons (16) loge un support de filtre (23) pour appuyer un filtre (21).

3. Appareil de préparation de boissons (1) selon la revendication 2, dans lequel le support de filtre (23) comprend une surface et des saillies (24) pour appuyer le filtre (21) dans un sens s'éloignant de la surface.

4. Appareil de préparation de boissons (1) selon l'une quelconque des revendications précédentes 1 à 3, qui présente seulement une ouverture de décharge (25) pour décharger les boissons préparées à partir de la chambre de préparation de boissons (16).

5. Appareil de préparation de boissons (1) selon l'une quelconque des revendications précédentes 1 à 4, dans lequel les chambres de réception de boissons (31) sont mobiles dans l'appareil de préparation de boissons (1) afin de régler leur alignement par rapport à l'ouverture de décharge (25).

6. Appareil de préparation de boissons (1) selon l'une quelconque des revendications précédentes 1 à 5, qui comprend encore une unité de réception de boissons (30) afin de loger les chambres de réception de boissons (31).

7. Appareil de préparation de boissons (1) selon la revendication 6, dans lequel les chambres de réception de boissons (31) comprennent chacune un segment de l'unité de réception de boissons (30).

8. Appareil de préparation de boissons (1) selon les revendications 6 ou 7, dans lequel l'unité de réception de boissons (30) est rotative dans l'appareil de préparation de boissons (1) afin de régler l'alignement des chambres de réception de boissons (31) par rapport à l'ouverture de décharge (25).

9. Appareil de préparation de boissons (1) selon l'une quelconque des revendications précédentes 1 à 8, qui comprend seulement une sortie (33) coopérant avec la chambre de réception de boissons (31) qui est alignée par rapport à l'ouverture de décharge (25) afin de permettre que les boissons soient distribuées à partir de la chambre de réception de boissons (31).

10. Appareil de préparation de boissons (1) selon l'une quelconque des revendications précédentes 1 à 8, qui comprend une sortie séparée (33) pour chaque chambre de réception de boissons (31).

11. Appareil de préparation de boissons (1) selon l'une quelconque des revendications précédentes 1 à 10, dans lequel l'ouverture de décharge (25) comprend une buse.

12. Appareil de préparation de boissons (1) selon la revendication 11, dans lequel la buse comprend une ouverture ayant un diamètre suffisamment petit pour décharger les boissons en tant qu'un jet pour créer de la mousse dans les boissons dans la chambre de réception de boissons (31).

13. Appareil de préparation de boissons (1) selon la revendication 12, dans lequel l'ouverture présente une largeur qui se situe sensiblement dans la gamme comprise entre 0,75 mm et 0,9 mm.

14. Appareil de préparation de boissons (1) selon l'une quelconque des revendications précédentes 1 à 13, dans lequel les chambres de réception de boissons (31) comprennent des chambres de mousse dans lesquelles de la mousse peut être créée dans les boissons préparées.

15. Appareil de préparation de boissons (1) selon la revendication 14, qui comprend encore une chambre de dérivation qui peut être alignée à l'ouverture de décharge (25) afin de recevoir les boissons préparées qui sont déchargées à partir de l'ouverture de décharge (25), de sorte qu'elle met en dérivation les chambres de mousse (31) et que la création de mousse est évitée.

16. Ensemble de préparation de boissons (4) qui peut être monté d'une manière amovible sur un appareil de préparation de boissons (1), l'ensemble (4) comprenant :
une chambre de préparation de boissons (16) dans laquelle les boissons peuvent être préparées ;
une ouverture de décharge (25) pour décharger les boissons préparées à partir de la chambre de préparation de boissons (16) ;
plusieurs chambres de réception de boissons (31) pour recevoir les boissons préparées qui sont déchargées à travers l'ouverture de décharge (25) ; et
une ou plusieurs sorties (33) pour distribuer les boissons à partir des chambres de réception de boissons (31) dans une tasse (6) pour boire,
dans lequel l'alignement des chambres de réception de boissons (31) par rapport à l'ouverture de décharge (25) est réglable de manière à positionner l'une quelconque des chambres de réception de boissons (31) afin de recevoir les boissons de l'ouverture de décharge (25) au lieu de les recevoir de l'autre (des autres) chambre(s) de réception de boissons (31).

17. Procédé de préparation d'une boisson, le procédé comprenant les étapes suivantes consistant à :
fournir de l'eau chaude à une chambre de préparation de boissons (16) dans laquelle la boisson est préparée ;
décharger les boissons préparées à partir de la chambre de préparation de boissons (16) à travers une ouverture de décharge (25) ;
recevoir les boissons préparées qui sont déchargées à travers l'ouverture de décharge (25) dans une des plusieurs chambres de réception de boissons (31) ; et
distribuer les boissons à partir de la chambre de réception de boissons (31) à travers une sortie dans une tasse (6) pour boire,
dans lequel le procédé comprend le réglage de l'alignement des chambres de réception de boissons (31) par rapport à l'ouverture de décharge (25) de manière à positionner l'une quelconque des chambres de réception de boissons (31) afin de recevoir les boissons de l'ouverture de décharge (25) au lieu de les recevoir de l'autre (des autres) chambre(s) de réception de boissons (31).
